# EUROPEAN PATENT SPECIFICATION

(11) **EP 1 689 204 B1**
(45) Date of publication and mention of the grant of the patent: **14.11.2007**
(21) Application number: 05100743.3
(22) Date of filing: 03.02.2005
(51) Int. Cl.: H04Q 7/38

(54) **Method and apparatus for the autoselection of an emergency number in a mobile station**
Verfahren und Vorrichtung für die automatische Auswahl einer Notfallnummer in einer Mobilstation
Procédé et appareil de sélection automatique d'un numéro d'urgence dans une station mobile

(43) Date of publication of application: 09.08.2006
(73) Proprietor: Research In Motion Limited, Waterloo, Ontario N2L 3W8 (CA)
(72) Inventor: Islam, Muhammad, K2K 3N4, Ottawa (CA); Hossain, Asif, K2K 3H9, Kanata (CA)
(74) Representative: Rickard, David John

(56) References cited:
- EP-A- 1 061 716
- EP-A- 1 253 798
- US-A- 6 073 005
- US-A1- 2002 160 815

## Description

The present application relates to a method and apparatus for the autoselection of an emergency number in a mobile station and, in particular, relates to the use of the geographic indicator to select an appropriate emergency number to call from a mobile station.

Emergency numbers for mobile stations are not globally unique and vary from country to country. Examples of valid emergency numbers include 911, *911 and #911 in North America, 112 and 119 in South Korea, 111 in New Zealand, 000 and 106 in Australia, 110, 119 and 112 in China, among others.

In many mobile devices, emergency numbers may be automatically dialled by selecting an emergency call feature from a menu. Typically, a carrier specifies the valid emergency numbers that a mobile device must be programmed with at the factory. For example, in North America, carriers generally program the mobile device to include 911, #911 and *911 as the emergency numbers. This is required since mobile station treats valid emergency numbers differently than other numbers. If the mobile station recognizes a dialed number as one of the emergency numbers, then it executes a special network determination algorithm to a acquire a network even if it is not preferred or even if the mobile station does not have a valid SIM or equivalent network configuration information.

Some carriers may add other numbers in anticipation of roaming in other countries. Alternatively, other numbers could be meant for specific types of emergency services such as emergency text telephony for the deaf (known as TTY).

The expectation from carriers is that a user will know the emergency number of the country that they are in and manually dial that number. This is, however, inconvenient and potentially dangerous when a user is roaming in a country that he or she may not know the emergency number in. Further, when a mobile device or the keypad is locked, a user typically cannot manually dial an emergency number without manually unlocking it first and the only option is to select an emergency call item from a menu if the menu option is available on the mobile station. In this case, mobile station typically chooses a number from the list of valid emergency numbers. In some cases, the dialed number may not be the appropriate emergency number in the geographical area when the call is placed.

Some prior art solutions have attempted to address the above difficulty in part. For example, UK Patent Application GB 2,360,176 to Charbonnier teaches a method and system in which a mobile station automatically senses when an emergency number has been dialled and captures that call. The emergency block then automatically decamps from the network that the user is currently on and connects to an overlaid emergency network. Alternatively, if an emergency network is not available, the application teaches connecting to an emergency number on the public network the user is already connected to.

The problem with the Chabonnier solution is that it does not consider geographic location and is merely directed to facilitating the emergency call completion on either an emergency network by decamping automatically and then camping onto the overlaid emergency network, or by dialling a number on the public network if an emergency network is not available.

Various solutions have been presented to provide a substitution of a user's home emergency number with the emergency number of the location that the user is in. Specifically, U.S. Patent No. 6,073,005, European Application No. 1,061,716, U.S. Application Publication No. 2002/160815 and European patent Application No. 1,253,798 all disclose systems and methods in which a user's dialled emergency number is substituted with the emergency number of the location that the mobile device is in. However, all of these references suffer from the deficiency that the location of the user is the only parameter considered for performing said substitution.

### GENERAL

The present system and method preferably contributes to overcoming the above disadvantages.
In one embodiment, an aspect of the present invention involves obtaining a geographic indicator and using this geographic indicator, along with other options set in the mobile station, to determine the appropriate emergency number that should be dialed. Specifically, if the mobile station is operating on a code division multiple access (CDMA) wireless network, a mobile country code (MCC) is broadcast on the paging channel of the CDMA network. Prior to sending the emergency call origination message, the mobile station is required to receive all the system parameters including the MCC pursuant to CDMA standards. To resolve the ambiguity of what number to dial in an emergency, the mobile station device maintains a look-up table that maps the current MCC to the primary emergency number for a given service. The device can use this look-up table to select the appropriate emergency number for a given service and the emergency call can then be completed.

Further, when using a menu-driven emergency call, such as when the mobile station is locked, the mobile station can again use the look-up table to connect to the appropriate number.

In the case of certain options being set on the mobile station, the mobile station can use these options to select the appropriate number to dial. For example, if using TTY, many countries include a different number for placing an emergency call using TTY than for non-TTY. Thus, the look-up table could include both an option for a non-TTY emergency and a TTY emergency and the mobile station could check whether a variable is set to use or not to use TTY. This could, for example, be located in persistent memory on the mobile station and merely be a bit toggled on or off to indicate whether TTY is required.

Further, the above is applicable to a multi-mode mobile station that supports different air interface technologies. For example, if connected to a CDMA network, the mobile station applies one rule to decide the emergency number and if it is on a GSM/GPRS network then it uses the appropriate number for that type of air interface. This could also be stored in the look-up table.

As will be appreciated by those skilled in the art, other options exist including the use of GPS-based coordinates instead of the MCC.

The present application provides a method for the selection of an emergency number in a mobile station, the method comprising the steps of: following entry of an emergency dial string by a user, connecting to a network if the mobile station is not already connected to a network; determining whether a user is attempting to reach an emergency service provider, the determining step comparing the dial string entered by the user with a list of emergency numbers stored in a memory of the mobile station and determining that the user is attempting to reach an emergency service if the dial string entered by the user is among the stored list of emergency numbers; and if it is determined that the user is attempting to reach an emergency service provider, accessing a geographic indicator acquired by the mobile station relating to a country in which the mobile station is located; looking up an emergency dial string in a look-up table based on the geographic indicator, said looking up step considering a user pre-set parameter when looking up the emergency dial string to select an appropriate emergency dial string based on said parameter; and using the emergency dial string to call the emergency service provider.

The present application further provides a mobile station capable of selecting an emergency number based on a geographic indicator, comprising: means for connecting to a network if the mobile station is not already connected to a network following entry of an emergency dial string by a user; means for determining whether a user is attempting to reach an emergency service provider, said means being arranged to compare the dial string entered by the user with a list of emergency numbers stored in a memory of the mobile station and determine that the user is attempting to reach an emergency service if the dial string entered by the user is among the stored list of emergency numbers; means for accessing a geographic indicator acquired by the mobile station relating to a country in which the mobile station is located; and means for looking up an emergency dial string in a look-up table based on the geographic indicator, the means for looking up being arranged to consider a user pre-set parameter when looking up the emergency dial string to select an appropriate emergency dial string based on said parameter; and means for using the emergency dial string to call the emergency service provider; said means for looking up and means for using being responsive to said determining means determining that a user is attempting to reach an emergency service provider.

### BRIEF DESCRIPTION OF THE DRAWINGS

The present system and method will be better understood with reference to the drawings in which:
**FIGURE 1** is a flow chart showing an exemplary method according to the present application when a network is already acquired and a geographic indicator is known;
**FIGURE 2** is a flow chart showing an exemplary method according to the present invention when a network is not acquired at the time that an emergency number is attempted to be called manually;
FIGURE 3 is a flow chart showing an exemplary method according to the present application when the network is not acquired and the user selects emergency call menu option;
FIGURE 4 is a flow chart showing a method of speeding the lookup of emergency numbers by storing current MCC and emergency number pairs upon any change in the MCC; and
FIGURE 5 is a block diagram with an exemplary mobile station that could be used in association with the present method and system.

### DESCRIPTION OF PREFERRED EMBODIMENTS

Reference is now made to the drawings.

In the examples below, the geographic identifier is identified as the mobile country code (MCC) of a CDMA wireless network. However, as will be appreciated by those skilled in the art, other geographical indicators could be used, including, but not limited to, the use of a global positioning system location and a look-up table.

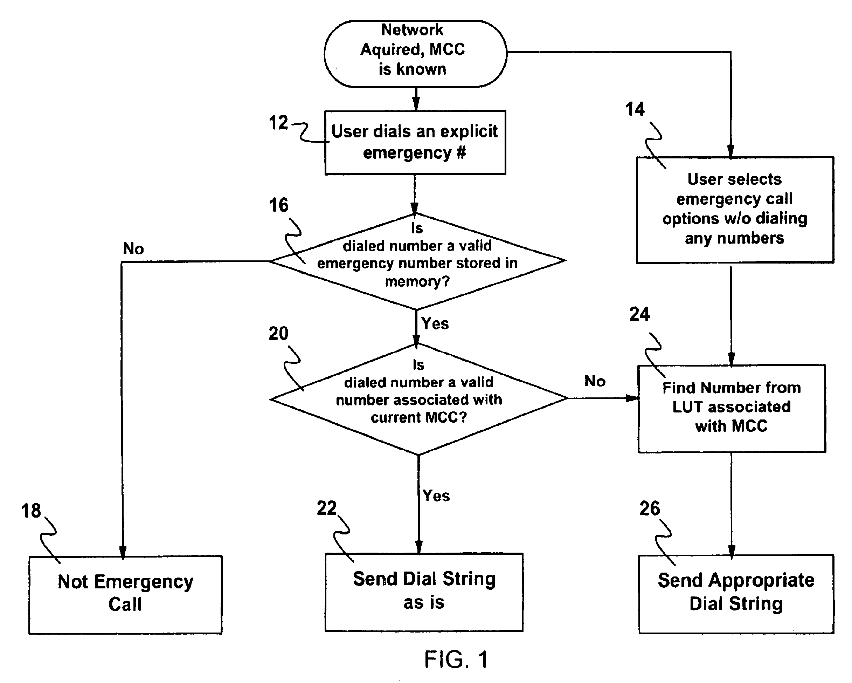

Reference is made to FIGURE 1. In the case where a mobile station has already acquired a network and a geographic indicator such as the MCC is known, a mobile station could send an appropriate emergency number according to the exemplary flow chart of this diagram. Specifically, a user can enter an emergency number in one of two ways. A first method is to explicitly dial an emergency number as indicated in step 12. Alternatively, the user could select emergency call option from a menu, a dedicated button or any other means to select an emergency number without dialling it in step 14.

If the user dials a number explicitly in step 12, the mobile station proceeds to step 16 in which a determination is made as to whether the dialed number is a valid emergency number as stored in memory.

As will be appreciated by those skilled in the art, a look-up table could exist in the memory of a mobile station which includes all of the known emergency numbers for various regions. For example, an exemplary table could be the following:

**Table 1**

| *Country* | *MCC* | *Emergency Number* |
|---|---|---|
| Australia | 505 | 000 |
| Canada | 302 | 911 |
| South Korea | 450 | 112 |
| New Zealand | 530 | 111 |
| U.S.A. | 310-316 | 911 |

Using a look-up table as indicated in Table 1, the mobile station could go through the list of emergency numbers to indicate whether or not the number dialed corresponds with any of the emergency numbers in the table.

If in step 16 it is determined that the number dialed is not a number located within the above table or not an emergency number identified through other means, the mobile station proceeds to step 18 in which it identifies the call as a non-emergency call and the mobile station proceeds as it would during a regular call.

Conversely, if in step 16 the mobile station determines that the number dialled is an emergency number, the mobile station next checks to see whether the number dialled is a valid number associated with the current MCC for the network the mobile station is currently connected to. This is accomplished using the table above and checking whether the number dialled corresponds with the emergency number in the table for the current MCC. If in step 20 it is determined that the numbers match, the mobile station proceeds to step 22 in which the dial string is sent as is. Alternatively, if the dial string does not match the number in the table corresponding with the MCC that the mobile station is currently in, the number is found from the look-up table in step 24 and the mobile station proceeds to step 26 in which the appropriate emergency dial string replaces the dial string the user entered.

The above therefore replaces the number the user dialed with the appropriate number. Thus, if a user whose home network is in North America but is roaming in Australia dials 911, the mobile station will recognize that this is an emergency call and will replace the 911 with 000 according to the above table.

Alternatively, a user may have an option of selecting an emergency call without dialing any numbers. This can, for example, be done through a menu or in certain cases through a dedicated button on the mobile station. A mobile station that is locked (e.g. keypad is locked) will, for example, only have a few options including selecting emergency dialing. If the user selects an emergency call option without dialing any numbers, the mobile station proceeds through step 14 directly to step 24. In this way, the mobile station looks up the appropriate emergency call number associated with the MCC and this is sent in step 26.

The selection of an appropriate emergency number based on a table and geographic indicator thus overcomes deficiencies in the prior art by ensuring that a user can call an emergency number when roaming, even if the mobile station is locked. Further, the emergency number dialed will be the appropriate number for that location rather than the number associated with the user's home network.

As will be appreciated by those skilled in the art, in step 24 the mobile station can find the number from the look-up table associated with the MCC. However, the mobile station could further use other parameters to find an alternative number. For example, teletype services for the deaf or hearing-impaired (TTY) is one option on many mobile stations. If the TTY option is set, the mobile station may be required to contact a different number than a non-TTY emergency number.

This could be illustrated within a table as follows:

**Table 2**

| *Country* | *MCC* | *Non-TTY Emergency Number* | *TTY Emergency Number* |
|---|---|---|---|
| Australia | 505 | 000 | 106 |
| Canada | 302 | 911 | 911 |
| South Korea | 450 | 112 | 112 |
| New Zealand | 530 | 111 | 111 |
| U.S.A. | 310-316 | 911 | 911 |

As illustrated in the table above, Australia has a different number for a non-TTY emergency than for a TTY emergency. Therefore, the mobile station in step 24 could determine whether a parameter has been set on the mobile station indicating whether the user prefers a TTY or a non-TTY service and based on this parameter send the appropriate dial string in step 26.

In a further alternative embodiment, if the user has explicitly dialed an emergency number in step 12, step 24 may, even if the TTY parameter is set, dial the number that the user has input as long as that number is associated with the MCC. Thus, for example, if the user is in Australia and dials 000, even if the TTY option has been set on the mobile station, the mobile station in step 26 may still send 000 since the user has dialed a valid number and thus explicitly selected a non-TTY emergency number.

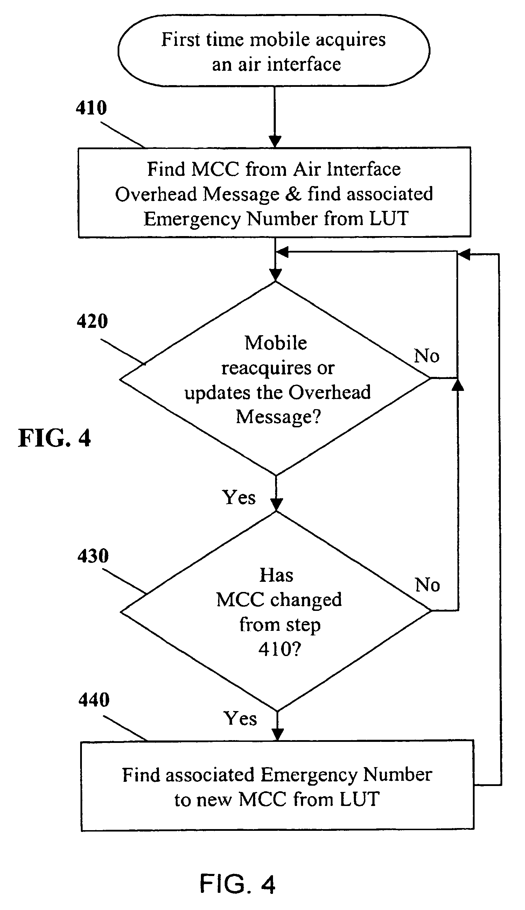

In order to expedite the finding of an emergency number in an emergency situation, a MCC and emergency number pairing could be stored in the mobile station, for example in persistent memory. Reference is now made to FIGURE 4. FIGURE 4 illustrates in more detail the process involved with step 24 from FIGURE 1. In FIGURE 4, the first time a mobile system acquires an air interface, for example when the wireless device is turned on or when logging into a network, the mobile station proceeds to step 410. In step 410 the mobile station finds the MCC from the Air Interface Overhead Message and, based on this MCC, finds the emergency number associated with that MCC from a look up table. The mobile remembers the MCC and the emergency number pair in order to facilitate the calling of an emergency number at a future point.

The mobile station next proceeds to step 420. In step 420, the mobile station checks to see whether any operations occurred that makes the mobile reacquire or update the overhead message. This would occur, for example, if the mobile moves into a different network. If in step 420 it is found that the mobile has not performed any operation that makes it require or update the overhead message, the mobile station loops back to step 420 and continues to check for a change.

If in step 420 something has occurred that makes the mobile require and update its overhead message, then the mobile station then proceeds to step 430. In step 430 the mobile station checks to see whether the MCC has changed from step 410. If no, the mobile station then proceeds back to step 420 and again continues to check for changes in the overhead messages for the mobile station. Conversely, if the MCC has changed, then the mobile station proceeds to step 440 in which the emergency number corresponding to the new MCC is found from a lookup table. This number is then stored in a memory location for quick access during an emergency situation. Once the correct emergency number is found from the lookup table, the mobile station proceeds back to step 420 in order to determine whether any further changes are made through the reacquisition or updating of overhead messages.

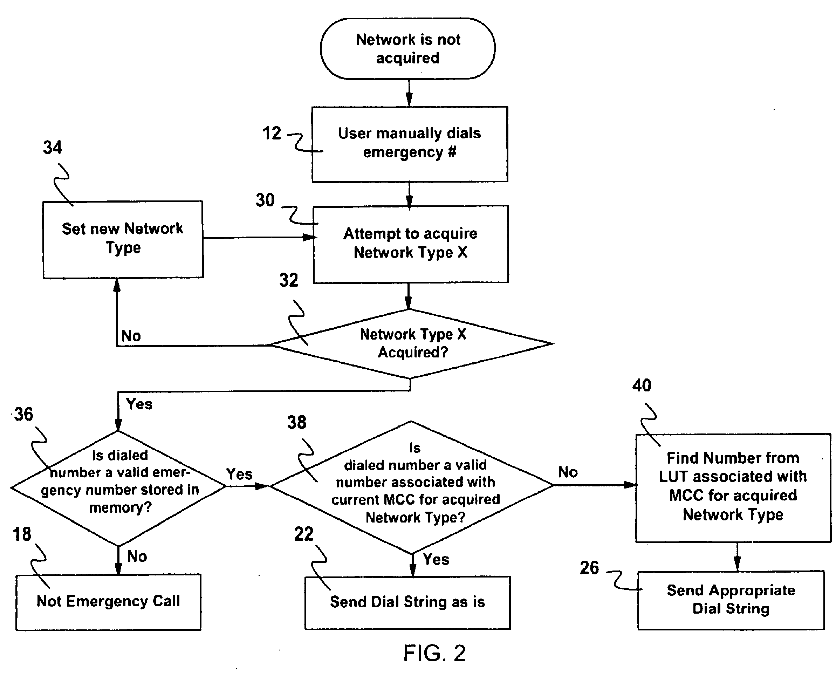

Reference is now made to FIGURE 2. FIGURE 2 illustrates a flow chart in which a network is not acquired and in which the user attempts to manually dial an emergency number. In the case of FIGURE 2, the mobile station first attempts to acquire a network of a first default type in step 30. In step 32, the mobile station then checks whether the network was acquired.

If in step 32 it is determined that a network was not acquired, the mobile station next proceeds to step 34. In the case of a mobile station that supports multiple air interface technologies, in step 34 a new network type can be set. Alternatively, if the mobile station does not support different air interface technologies, then in step 34 no new network type is set and the mobile station proceeds back to step 30 in which it attempts to acquire a network.

A look-up table preferably exists to allow the mobile station to look up the appropriate number for the appropriate air interface. For example, in some CDMA networks, one rule is applied to deciding the emergency number, whereas in a GSM/GPRS network, a different number could be used (for example, 112). For example, if the user dials 000 on a multi-mode device, assuming that a CDMA network can be acquired, if the device fails to acquire a CDMA network, it can then attempt to acquire a GSM system and automatically change the dial string to 112. As would be appreciated by those skilled in the art, the look-up table can thus be expanded to have, for example, CDMA non-TTY emergency numbers, CDMA TTY emergency numbers, GSM/GPRS numbers, and so on and use the appropriate parameters as set within the mobile station and according to the air interface, an MCC acquired in order to determine the appropriate emergency number to dial.

Once a network is acquired in step 32, the mobile station proceeds to step 36 in which it determines whether the dialed number is a valid emergency number as stored in the look-up tables. If no, the mobile station proceeds to step 18 in which it is determined that the call is not an emergency call. Alternatively, the mobile station moves to step 38 in which it checks whether the dialed number is valid for the current MCC and for the acquired network type. As indicated above, this is based on the look-up table.

If in step 38 the number is valid for both the MCC and the network type, then the mobile station proceeds to step 22 and sends the dialed string as is. Otherwise, the mobile station proceeds to step 40 in which it finds the appropriate number from the look-up table associated with both the MCC and the network type and sends this number in step 26.

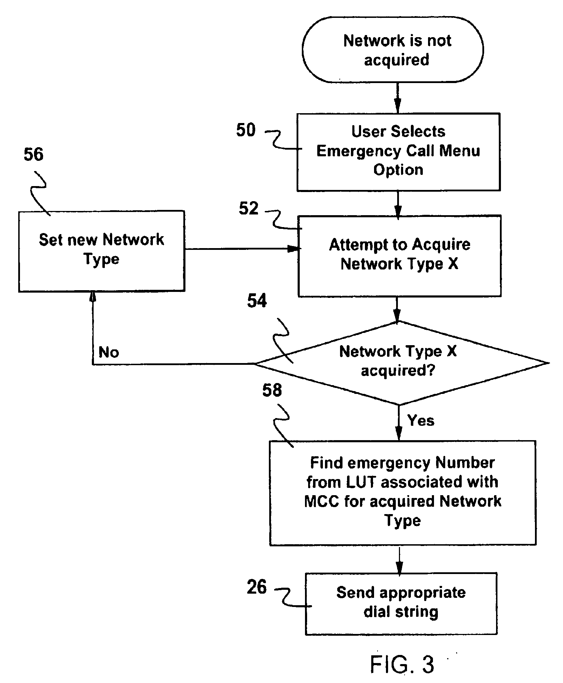

Alternatively, if the user selects to dial an emergency number from a menu option, a special button, or other means known to those skilled in the art without dialing the number manually, and if the network is not acquired, the system must then acquire a network and find the appropriate number to send. Reference is now made to FIGURE 3.

The user selects an emergency call menu option in step 50 and the mobile station proceeds to step 52 in which it attempts to acquire a network of type X. In step 54, the mobile station determines whether a network has been acquired and, if not, the mobile station proceeds to step 56. As with the above, if the mobile station is a multi-mode mobile that supports multiple network or air interface technologies, then the mobile station can set a new network type in step 56 and proceed back to step 52 attempting to acquire this new network type.

Alternatively, if the mobile station is not a multiple mode mobile station, step 56 merely is ignored and the mobile station proceeds back to step 52 and attempts to acquire the network that the mobile station is capable of acquiring.

Once the mobile station acquires the network in step 54, then it proceeds to step 58 in which it determines the appropriate number by looking up in a look-up table the number for the MCC and the network type that are currently acquired. Again, other parameters such as TTY settings could also be used in step 58 to determine the appropriate number.

As will be appreciated by those skilled in the art, instead of an MCC, other geographic information such as GPS could be used in the case of a network not having an MCC. Other geographic indicators could also be used.
Once the mobile station finds the appropriate dial string in step 58, it sends this dial string in step 26.

As will be appreciated by those skilled in the art, the above works on various networks, including CDMA networks that are both second generation and third generation. Thus, the method and system could be employed on a mobile device on current networks.

As will be further appreciated, the look-up table as described above can be preprogrammed at the factory and can be updated via software upgrade or over the air provisioning or other methods known to those skilled in the art. The present method and system is not meant to be limited to any type of updating for a look-up table.

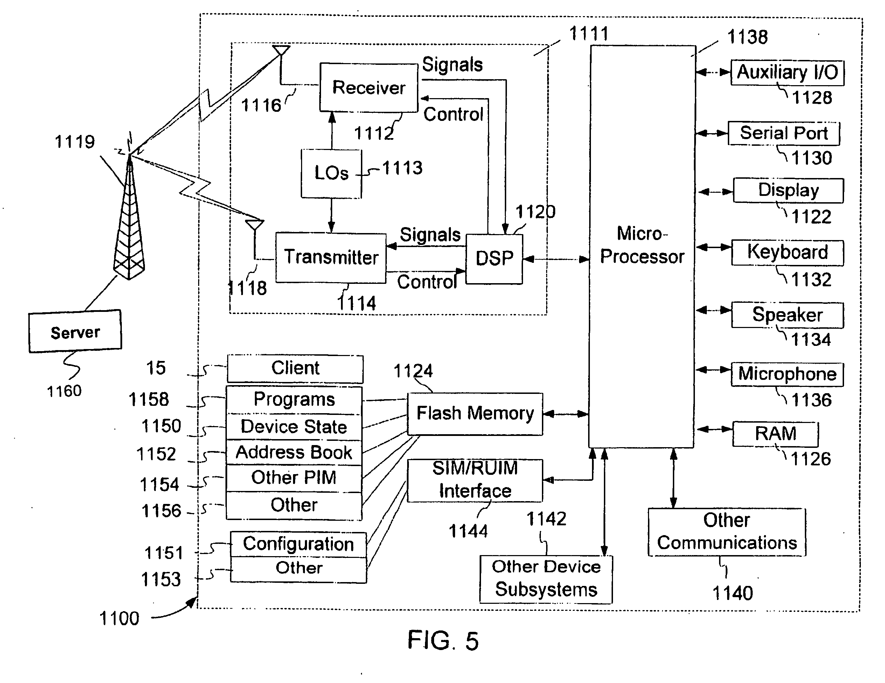

Reference is now made to FIGURE 5. FIGURE 5 is a block diagram illustrating a host mobile station including preferred embodiments of the techniques of the present application. Mobile station 1100 is preferably a two-way wireless communication device having at least voice and data communication capabilities. Mobile station 1100 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device 1100 is enabled for two-way communication, it will incorporate a communication subsystem 1111, including both a receiver 1112 and a transmitter 1114, as well as associated components such as one or more, preferably embedded or internal, antenna elements 1116 and 1118, local oscillators (LOs) 1113, and a processing module such as a digital signal processor (DSP) 1120. As will be apparent to those skilled in the field of communications, the particular design of the communication subsystem 1111 will be dependent upon the communication network in which the device is intended to operate. For example, mobile station 1100 may include a communication subsystem 1111 designed to operate within the Mobitex^{™} mobile communication system, the DataTAC^{™} mobile communication system, GPRS network, UMTS network, EDGE network or CDMA network.

Network access requirements will also vary depending upon the type of network 1119. For example, in the Mobitex and DataTAC networks, mobile station 1100 is registered on the network using a unique identification number associated with each mobile station. In UMTS and GPRS networks, and in some CDMA networks, however, network access is associated with a subscriber or user of mobile station 1100. A GPRS mobile station therefore requires a subscriber identity module (SIM) card in order to operate on a GPRS network, and a RUIM in order to operate on some CDMA networks. Without a valid SIM/RUIM card, a GPRS/UMTS/CDMA mobile station may not be fully functional. Local or non-network communication functions, as well as legally required functions (if any) such as emergency calling, may be available, but mobile station 1100 will be unable to carry out any other functions involving communications over the network 1100. The SIM/RUIM interface 1144 is normally similar to a card-slot into which a SIM/RUIM card can be inserted and ejected like a diskette or PCMCIA card. The SIM/RUIM card can have approximately 64K of memory and hold many key configuration 1151, and other information 1153 such as identification, and subscriber related information.

When required network registration or activation procedures have been completed, mobile station 1100 may send and receive communication signals over the network 1119. Signals received by antenna 1116 through communication network 1119 are input to receiver 1112, which may perform such common receiver functions as signal amplification, frequency down conversion, filtering, channel selection and the like, and in the example system shown in FIGURE 5, analog to digital (A/D) conversion. A/D conversion of a received signal allows more complex communication functions such as demodulation and decoding to be performed in the DSP 1120. In a similar manner, signals to be transmitted are processed, including modulation and encoding for example, by DSP 1120 and input to transmitter 1114 for digital to analog conversion, frequency up conversion, filtering, amplification and transmission over the communication network 1119 via antenna 1118. DSP 1120 not only processes communication signals, but also provides for receiver and transmitter control. For example, the gains applied to communication signals in receiver 1112 and transmitter 1114 may be adaptively controlled through automatic gain control algorithms implemented in DSP 1120.

Network 1119 may further communicate with multiple systems, including a server 1160 and other elements (not shown). For example, network 1119 may communicate with both an enterprise system and a web client system in order to accommodate various clients with various service levels.

Mobile station 1100 preferably includes a microprocessor 1138 which controls the overall operation of the device. Communication functions, including at least data and voice communications, are performed through communication subsystem 1111. Microprocessor 1138 also interacts with further device subsystems such as the display 1122, flash memory 1124, random access memory (RAM) 1126, auxiliary input/output (I/O) subsystems 1128, serial port 1130, keyboard 1132, speaker 1134, microphone 1136, a short-range communications subsystem 1140 and any other device subsystems generally designated as 1142.

Some of the subsystems shown in FIGURE 5 perform communication-related functions, whereas other subsystems may provide "resident" or on-device functions. Notably, some subsystems, such as keyboard 1132 and display 1122, for example, may be used for both communication-related functions, such as entering a text message for transmission over a communication network, and device-resident functions such as a calculator or task list.

Operating system software used by the microprocessor 1138 is preferably stored in a persistent store such as flash memory 1124, which may instead be a read-only memory (ROM) or similar storage element (not shown). Those skilled in the art will appreciate that the operating system, specific device applications, or parts thereof, may be temporarily loaded into a volatile memory such as RAM 1126. Received communication signals may also be stored in RAM 1126. Further, a unique identifier is also preferably stored in read-only memory.

As shown, flash memory 1124 can be segregated into different areas for both computer programs 1158 and program data storage 1150, 1152, 1154 and 1156. These different storage types indicate that each program can allocate a portion of flash memory 1124 for their own data storage requirements. Microprocessor 1138, in addition to its operating system functions, preferably enables execution of software applications on the mobile station. A predetermined set of applications that control basic operations, including at least data and voice communication applications for example, will normally be installed on mobile station 1100 during manufacturing. A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network 1119. In a preferred embodiment, the PIM data items are seamlessly integrated, synchronized and updated, via the wireless network 1119, with the mobile station user's corresponding data items stored or associated with a host computer system. Further applications may also be loaded onto the mobile station 1100 through the network 1119, an auxiliary I/O subsystem 1128, serial port 1130, short-range communications subsystem 1140 or any other suitable subsystem 1142, and installed by a user in the RAM 1126 or preferably a non-volatile store (not shown) for execution by the microprocessor 1138. Such flexibility in application installation increases the functionality of the device and may provide enhanced on-device functions, communication-related functions, or both. For example, secure communication applications may enable electronic commerce functions and other such financial transactions to be performed using the mobile station 1100. These applications will however, according to the above, in many cases need to be approved by a carrier.

In a data communication mode, a received signal such as a text message or web page download will be processed by the communication subsystem 1111 and input to the microprocessor 1138, which preferably further processes the received signal for output to the display 1122, or alternatively to an auxiliary I/O device 1128. A user of mobile station 1100 may also compose data items such as email messages for example, using the keyboard 1132, which is preferably a complete alphanumeric keyboard or telephone-type keypad, in conjunction with the display 1122 and possibly an auxiliary I/O device 1128. Such composed items may then be transmitted over a communication network through the communication subsystem 1111.

For voice communications, overall operation of mobile station 1100 is similar, except that received signals would preferably be output to a speaker 1134 and signals for transmission would be generated by a microphone 1136. Alternative voice or audio I/O subsystems, such as a voice message recording subsystem, may also be implemented on mobile station 1100. Although voice or audio signal output is preferably accomplished primarily through the speaker 1134, display 1122 may also be used to provide an indication of the identity of a calling party, the duration of a voice call, or other voice call related information for example.

Serial port 1130 in FIGURE 5 would normally be implemented in a personal digital assistant (PDA)-type mobile station for which synchronization with a user's desktop computer (not shown) may be desirable. Such a port 1130 would enable a user to set preferences through an external device or software application and would extend the capabilities of mobile station 1100 by providing for information or software downloads to mobile station 1100 other than through a wireless communication network. The alternate download path may for example be used to load an encryption key onto the device through a direct and thus reliable and trusted connection to thereby enable secure device communication.

Other communications subsystems 1140, such as a short-range communications subsystem, is a further optional component which may provide for communication between mobile station 1100 and different systems or devices, which need not necessarily be similar devices. For example, the subsystem 1140 may include an infrared device and associated circuits and components or a Bluetooth^{™} communication module to provide for communication with similarly enabled systems and devices.

The exemplary mobile station of FIGURE 5 is meant to be illustrative and other devices with more or fewer features than the above could equally be used for the present method and apparatus.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for the selection of an emergency number in a mobile station (1100), the method comprising the steps of:
following entry of an emergency dial string by a user, connecting to a network (1119) if the mobile station (1100) is not already connected to a network (1119);
determining whether a user is attempting to reach an emergency service provider, the determining step comparing the dial string entered by the user with a list of emergency numbers stored in a memory of the mobile station (1100) and determining that the user is attempting to reach an emergency service if the dial string entered by the user is among the stored list of emergency numbers; and
if it is determined that the user is attempting to reach an emergency service provider,
accessing a geographic indicator acquired by the mobile station (1100) relating to a country in which the mobile station (1100) is located;
looking up an emergency dial string in a look-up table based on the geographic indicator, said looking up step considering a user pre-set parameter when looking up the emergency dial string to select an appropriate emergency dial string based on said parameter; and
using the emergency dial string to call the emergency service provider.

2. The method of claim 1, wherein the determining step determines that the user is attempting to reach an emergency number if the user selects an emergency call option on the mobile station (1100).

3. The method of claim 1 or claim 2, wherein the step of looking up the emergency dial string in the look-up table comprises the steps of:
checking in the look-up table to determine whether the dial string entered by the user is a valid emergency number associated with a stored geographic indicator matching that for the network (1119) the mobile station (1100) is currently connected to; and,
if it is determined that the dial string is a valid emergency number, using this number as the emergency dial string; or,
if it is determined that the dial string is not a valid emergency number, replacing the dial string entered by the user by the emergency number associated with the stored geographic indicator.

4. The method of any of claims 1 to 3, wherein the network (1119) is a code division multiple access 'CDMA' network and the geographic indicator is a mobile country code 'MCC'.

5. The method of any of claims 1 to 3, wherein the geographic indicator is a global positioning system 'GPS' signal.

6. The method of any of claims 1 to 5, wherein the connecting step, if failing to connect to a first network type, connects to a second network type.

7. The method of claim 6, wherein the first network type is a code division multiple access 'CDMA' network ((1119) and the second network type is a global system for mobile communications 'GSM' network.

8. The method of any one of claims 1 to 7, wherein the user set parameter comprises a teletype for the deaf `TTY' parameter.

9. A mobile station (1100) capable of selecting an emergency number based on a geographic indicator, comprising:
means (1111) for connecting to a network (1119) if the mobile station (1100) is not already connected to a network (1119) following entry of an emergency dial string by a user;
means (1138) for determining whether a user is attempting to reach an emergency service provider, said means being arranged to compare the dial string entered by the user with a list of emergency numbers stored in a memory of the mobile station (1100) and determine that the user is attempting to reach an emergency service if the dial string entered by the user is among the stored list of emergency numbers;
means for accessing a geographic indicator acquired by the mobile station (1100) relating to a country in which the mobile station (1100) is located; and
means (1138) for looking up an emergency dial string in a look-up table based on the geographic indicator, the means for looking up being arranged to consider a user pre-set parameter when looking up the emergency dial string to select an appropriate emergency dial string based on said parameter; and
means (1111) for using the emergency dial string to call the emergency service provider;
said means for looking up and means for using being responsive to said determining means determining that a user is attempting to reach an emergency service provider.

10. The mobile station of claim 9, wherein the means (1138) for determining if a user is attempting to reach an emergency service provider is arranged to determine that the user is attempting to reach an emergency number responsive to the user selecting an emergency call option on the mobile station (1100).

11. The mobile station of claim 9 or claim 10, wherein the means (1138) for looking up the emergency dial string in the look-up table is arranged to:
check in the look-up table to determine whether the dial string entered by the user is a valid emergency number associated with a stored geographic indicator matching that for the network (1119) the mobile station (1100) is currently connected to; and,
responsive to determining that the dial string is a valid emergency number, to use this number as the emergency dial string;
responsive to determining that the dial string is not a valid emergency number, to replace the dial string entered by the user by the emergency number associated with the stored geographic indicator.

12. The mobile station of any of claims 9 to 11, wherein the network (1119) is a code division multiple access 'CDMA' network and the geographic indicator is a mobile country code 'MCC'.

13. The mobile station of any of claims 10 to 12, wherein the geographic indicator is a global positioning system signal.

14. The mobile station of any of claims 9 to 13, wherein the means (1111) for connecting, responsive to a failure to connect to a first network type, is arranged to connect to a second network type.

15. The mobile station of claim 14, wherein the first network type is a code division multiple access 'CDMA' network (1119) and the second network type is a global system for mobile communications 'GSM' network.

16. The mobile station of any one of claims 9 to 15, wherein the user set parameter comprises a teletype for the deaf 'TTY' parameter.

17. A wireless communications system (1119) including at least one mobile station (1100) according to any of claims 9 to 16.

18. A machine readable medium (1124) comprising program code means executable by a processor (1138) of a mobile station (1100) said code means being adopted to implement the method of any of claims 1 to 8.

## Patentansprüche

1. Verfahren zur Auswahl einer Notfallnummer in einer Mobilstation (1100), wobei das Verfahren die folgenden Schritte umfasst:
im Anschluss an das Eingeben einer Notfall-Wählzeichenfolge durch einen Benutzer, das Verbinden mit einem Netz (1119), wenn die Mobilstation (1100) nicht bereits mit einem Netz (1119) verbunden ist;
das Ermitteln, ob ein Benutzer versucht, einen Notfall-Dienstanbieter zu erreichen, wobei der Schritt des Ermittelns die durch den Benutzer eingegebene Wählzeichenfolge mit einer in einem Speicher der Mobilstation (1100) gespeicherten Liste von Notfallnummern vergleicht und wobei ermittelt wird, dass der Benutzer versucht, einen Notfalldienst zu erreichen, wenn die durch den Benutzer eingegebene Rufzeichenfolge in der gespeicherten Liste von Notfallnummern enthalten ist; und
wenn ermittelt wird, dass der Benutzer versucht, einen Notfall-Dienstanbieter zu erreichen,
das Zugreifen auf einen durch die Mobilstation (1100) erworbenen geografischen Indikator, der einem Land zugeordnet ist, in dem sich die Mobilstation (1100) befindet;
das Nachschlagen einer Notfall-Wählzeichenfolge in einer Nachschlagetabelle auf der Basis des geografischen Indikators, wobei der Schritt des Nachschlagens einen vom Benutzer zuvor festgelegten Parameter berücksichtigt, wenn die Notfall-Wählzeichenfolge nachgeschlagen wird, um auf der Basis dieses Parameters eine geeignete Notfall-Wählzeichenfolge auszuwählen; und
das Verwenden der Notfall-Wählzeichenfolge zum Anrufen des Notfall-Dienstanbieters.

2. Verfahren gemäß Anspruch 1, wobei der Schritt des Ermittelns ermittelt, dass der Benutzer versucht, eine Notfallnummer zu erreichen, wenn der Benutzer eine Notrufoption auf der Mobilstation (1100) auswählt.

3. Verfahren gemäß Anspruch 1 oder Anspruch 2, wobei der Schritt des Nachschlagens der Notfall-Wählzeichenfolge in der Nachschlagetabelle die folgenden Schritte umfasst:
das Überprüfen der Nachschlagetabelle, um zu ermitteln, ob die durch den Benutzer eingegebene Wählzeichenfolge eine gültige Notfallnummer ist, die einem gespeicherten geografischen Indikator zugeordnet ist, der mit dem für das Netz (1199) übereinstimmt, mit dem die Mobilstation (1100) aktuell verbunden ist; und
wenn ermittelt wird, dass die Wählzeichenfolge eine gültige Notfallnummer ist, das Verwenden dieser Nummer als die Notfall-Wählzeichenfolge; oder
wenn ermittelt wird, dass die Wählzeichenfolge keine gültige Notfallnummer ist, das Ersetzen der durch den Benutzer eingegebenen Wählzeichenfolge durch die Notfallnummer, die dem gespeicherten geografischen Indikator zugeordnet ist.

4. Verfahren gemäß jedem der Ansprüche 1 bis 3, wobei das Netz (1199) ein CDMA-Netz (Code Division Multiple Access) und der geografische Indikator ein MCC (Mobile Country Code - Mobil-Ländercode) ist.

5. Verfahren gemäß jedem der Ansprüche 1 bis 3, wobei der geografische Indikator ein GPS-Signal (Global Positioning System) ist.

6. Verfahren gemäß jedem der Ansprüche 1 bis 5, wobei der Schritt des Verbindens beim Fehlschlagen des Verbindens mit einem ersten Netztyp das Verbinden mit einem zweiten Netztyp einschließt.

7. Verfahren gemäß Anspruch 6, wobei der erste Netztyp ein CDMA-Netz (Code Division Multiple Access) (1199) und der zweite Netztyp ein GSM-Netz (Global System for Mobile Communications) ist.

8. Verfahren gemäß jedem der Ansprüche 1 bis 7, wobei der vom Benutzer festgelegte Parameter einen TTY-Parameter für den Fernschreibdienst für Hörgeschädigte umfasst.

9. Mobilstation (1100), die in der Lage ist, eine Notfallnummer auf der Basis eines geografischen Indikators auszuwählen, umfassend:
Mittel (1111) zum Verbinden mit einem Netz (1119), wenn die Mobilstation (1100) nicht bereits mit einem Netz (1119) verbunden ist, im Anschluss an das Eingeben einer Notfall-Wählzeichenfolge durch einen Benutzer;
Mittel (1138) zum Ermitteln, ob ein Benutzer versucht, einen Notfall-Dienstanbieter zu erreichen, wobei diese Mittel eingerichtet sind zum Vergleichen der durch den Benutzer eingegebenen Wählzeichenfolge mit einer in einem Speicher der Mobilstation (1100) gespeicherten Liste von Notfallnummern und zum Ermitteln, dass der Benutzer versucht, einen Notfalldienst zu erreichen, wenn die durch den Benutzer eingegebene Rufzeichenfolge in der gespeicherten Liste von Notfallnummern enthalten ist;
Mittel zum Zugreifen auf einen durch die Mobilstation (1100) erworbenen geografischen Indikator, der einem Land zugeordnet ist, in dem sich die Mobilstation (1100) befindet; und
Mittel (1138) zum Nachschlagen einer Notfall-Wählzeichenfolge in einer Nachschlagetabelle auf der Basis des geografischen Indikators, wobei die Mittel zum Nachschlagen eingerichtet sind zum Berücksichtigen eines vom Benutzer zuvor festgelegten Parameters, wenn die Notfall-Wählzeichenfolge nachgeschlagen wird, um auf der Basis dieses Parameters eine geeignete Notfall-Wählzeichenfolge auszuwählen; und
Mittel (1111) zum Verwenden der Notfall-Wählzeichenfolge zum Anrufen des Notfall-Dienstanbieters;
wobei die Mittel zum Nachschlagen und die Mittel zum Verwenden darauf reagieren, dass durch die Mittel zum Ermitteln ermittelt wird, dass ein Benutzer versucht, einen Notfall-Dienstanbieter zu erreichen.

10. Mobilstation gemäß Anspruch 9, wobei die Mittel (1138) zum Ermitteln, ob ein Benutzer versucht, einen Notfall-Dienstanbieter zu erreichen, dazu eingerichtet sind, als Reaktion auf das Auswählen einer Notrufoption durch den Benutzer auf der Mobilstation (1100) zu ermitteln, dass der Benutzer versucht, eine Notfallnummer zu erreichen.

11. Mobilstation gemäß Anspruch 9 oder Anspruch 10, wobei die Mittel (1138) zum Nachschlagen der Notfall-Wählzeichenfolge in der Nachschlagetabelle eingerichtet sind zum:
Überprüfen der Nachschlagetabelle, um zu ermitteln, ob die durch den Benutzer eingegebene Wählzeichenfolge eine gültige Notfallnummer ist, die einem gespeicherten geografischen Indikator zugeordnet ist, der mit dem für das Netz (1199) übereinstimmt, mit dem die Mobilstation (1100) aktuell verbunden ist; und
als Reaktion auf das Ermitteln, dass die Wählzeichenfolge eine gültige Notfallnummer ist, zum Verwenden dieser Nummer als die Notfall-Wählzeichenfolge;
als Reaktion auf das Ermitteln, dass die Wählzeichenfolge keine gültige Notfallnummer ist, zum Ersetzen der durch den Benutzer eingegebenen Wählzeichenfolge durch die Notfallnummer, die dem gespeicherten geografischen Indikator zugeordnet ist.

12. Mobilstation gemäß jedem der Ansprüche 9 bis 11, wobei das Netz (1199) ein CDMA-Netz (Code Division Multiple Access) und der geografische Indikator ein MCC (Mobile Country Code - Mobil-Ländercode) ist.

13. Mobilstation gemäß jedem der Ansprüche 10 bis 12, wobei der geografische Indikator ein GPS-Signal (Global Positioning System) ist.

14. Mobilstation gemäß jedem der Ansprüche 9 bis 13, wobei die Mittel (1111) zum Verbinden als Reaktion auf das Fehlschlagen des Verbindens mit einem ersten Netztyp zum Verbinden mit einem zweiten Netztyp eingerichtet sind.

15. Mobilstation gemäß Anspruch 14, wobei der erste Netztyp ein CDMA-Netz (Code Division Multiple Access) (1199) und der zweite Netztyp ein GSM-Netz (Global System for Mobile Communications) ist.

16. Mobilstation gemäß jedem der Ansprüche 9 bis 15, wobei der vom Benutzer festgelegte Parameter einen TTY-Parameter für den Fernschreibdienst für Hörgeschädigte umfasst.

17. Drahtlos-Kommunikationssystem (1119), das mindestens eine Mobilstation (1100) gemäß jedem der Ansprüche 9 bis 16 enthält.

18. Maschinenlesbares Medium (1124), das Programmcodemittel enthält, die durch einen Prozessor (1138) einer Mobilstation (1100) ausgeführt werden können, wobei diese Codemittel dazu eingerichtet sind, das Verfahren gemäß jedem der Ansprüche 1 bis 8 zu implementieren.

## Revendications

1. Un procédé destiné à la sélection d'un numéro d'urgence sur une station mobile (1100), le procédé comprenant les opérations suivantes :
suite à la saisie d'une chaîne de numérotation d'urgence par un utilisateur, la connexion à un réseau (1119) si la station mobile (1100) n'est pas déjà connectée à un réseau (1119),
la détermination si un utilisateur tente d'atteindre un prestataire de services d'urgence, l'opération de détermination comparant la chaîne de numérotation saisie par l'utilisateur avec une liste de numéros d'urgence conservée dans une mémoire de la station mobile (1100) et la détermination que l'utilisateur tente d'atteindre un service d'urgence si la chaîne de numérotation saisie par l'utilisateur se trouve dans la liste conservée en mémoire de numéros d'urgence, et
s'il est déterminé que l'utilisateur tente d'atteindre un prestataire de services d'urgence
l'accès à un indicateur géographique acquis par la station mobile (1100) relatif à un pays dans lequel se trouve la station mobile (1100),
la recherche d'une chaîne de numérotation d'urgence dans une table de consultation en fonction de l'indicateur géographique, ladite opération de consultation considérant un paramètre prédéfini par l'utilisateur lors de la consultation de la chaîne de numérotation d'urgence afin de sélectionner une chaîne de numérotation d'urgence appropriée en fonction dudit paramètre, et
l'utilisation de la chaîne de numérotation d'urgence pour appeler le prestataire de services d'urgence.

2. Le procédé selon la Revendication 1, où l'opération de détermination détermine que l'utilisateur tente d'atteindre un numéro d'urgence si l'utilisateur sélectionne une option d'appel d'urgence sur la station mobile (1100).

3. Le procédé selon la Revendication 1 ou 2, où l'opération de consultation de la chaîne de numérotation d'urgence dans la table de consultation comprend les opérations suivantes :
la vérification de la table de consultation afin de déterminer si la chaîne de numérotation saisie par l'utilisateur est un numéro d'urgence valide associé à un indicateur géographique conservé en mémoire correspondant à celui du réseau (1119) auquel la station mobile (1100) est actuellement connectée, et
s'il est déterminé que la chaîne de numérotation est un numéro d'urgence valide, l'utilisation de ce numéro en tant que chaîne de numérotation d'urgence, ou
s'il est déterminé que la chaîne de numérotation n'est pas un numéro d'urgence valide, le remplacement de la chaîne de numérotation saisie par l'utilisateur par le numéro d'urgence associé à l'indicateur géographique conservé en mémoire.

4. Le procédé selon l'une quelconque des Revendications 1 à 3, où le réseau (1119) est un réseau CDMA (accès multiple par code de répartition) et l'indicateur géographique est un code MCC (indicatif de pays de la station mobile).

5. Le procédé selon l'une quelconque des Revendications 1 à 3, où l'indicateur géographique est un signal GPS (système de géopositionnement par satellite).

6. Le procédé selon l'une quelconque des Revendications 1 à 5, où l'opération de connexion, si elle échoue à établir une connexion avec un premier type de réseau, établit une connexion avec un deuxième type de réseau.

7. Le procédé selon la Revendication 6, où le premier type de réseau est un réseau CDMA (accès multiple par code de répartition) (1119) et le deuxième type de réseau est un réseau GSM (système mondial de télécommunications mobiles).

8. Le procédé selon l'une quelconque des Revendications 1 à 7, où le paramètre défini par l'utilisateur comprend un téléimprimeur pour le paramètre malentendants (TTY).

9. Une station mobile (1100) capable de sélectionner un numéro d'urgence en fonction d'un indicateur géographique comprenant :
un moyen (1111) d'établir une connexion avec un réseau (1119) si la station mobile (1100) n'est pas déjà connectée à un réseau (1119) suite à la saisie d'une chaîne de numérotation d'urgence par un utilisateur,
un moyen (1138) de déterminer si un utilisateur tente d'atteindre un prestataire de services d'urgence, ledit moyen étant agencé de façon à comparer la chaîne de numérotation saisie par l'utilisateur avec une liste de numéros d'urgence conservée dans une mémoire de la station mobile (1100) et à déterminer si l'utilisateur tente d'atteindre un service d'urgence si la chaîne de numérotation saisie par l'utilisateur se trouve dans la liste conservée en mémoire de numéros d'urgence,
un moyen d'accéder à un indicateur géographique acquis par la station mobile (1100) relatif à un pays dans lequel se trouve la station mobile (1100), et
un moyen (1138) de consulter une chaîne de numérotation d'urgence dans une table de consultation en fonction de l'indicateur géographique, le moyen de consultation étant agencé de façon à considérer un paramètre prédéfini par l'utilisateur lors de la consultation de la chaîne de numérotation d'urgence afin de sélectionner une chaîne de numérotation d'urgence appropriée en fonction dudit paramètre, et
un moyen (1111) d'utiliser la chaîne de numérotation d'urgence pour appeler le prestataire de services d'urgence,
ledit moyen de consultation et ledit moyen d'utilisation étant réactifs audit moyen de détermination déterminant qu'un utilisateur tente d'atteindre un prestataire de services d'urgence.

10. La station mobile selon la Revendication 9, où le moyen (1138) de détermination si un utilisateur tente d'atteindre un prestataire de services d'urgence est agencé de façon à déterminer que l'utilisateur tente d'atteindre un numéro d'urgence en réaction à la sélection par l'utilisateur d'une option d'appel d'urgence sur la station mobile (1100).

11. La station mobile selon la Revendication 9 ou 10, où le moyen (1138) de consulter la chaîne de numérotation d'urgence dans la table de consultation est agencé de façon à :
vérifier la table de consultation afin de déterminer si la chaîne de numérotation saisie par l'utilisateur est un numéro d'urgence valide associé à un indicateur géographique conservé en mémoire correspondant à celui du réseau (1119) auquel la station mobile (1100) est actuellement connectée, et
en réaction à la détermination que la chaîne de numérotation est un numéro d'urgence valide, l'utilisation de ce numéro en tant que chaîne de numérotation d'urgence,
en réaction à la détermination que la chaîne de numérotation n'est pas un numéro d'urgence valide, le remplacement de la chaîne de numérotation saisie par l'utilisateur par le numéro d'urgence associé à l'indicateur géographique conservé en mémoire.

12. La station mobile selon l'une quelconque des Revendications 9 à 11, où le réseau (1119) est un réseau CDMA (accès multiple par code de répartition) et l'indicateur géographique est un code MCC (indicatif de pays de la station mobile.

13. La station mobile selon l'une quelconque des Revendications 10 à 12, où l'indicateur géographique est un signal de système de géopositionnement par satellite.

14. La station mobile selon l'une quelconque des Revendications 9 à 13, où le moyen (1111) d'établissement d'une connexion, en réaction à un échec de connexion à un premier type de réseau, est agencé de façon à établir une connexion avec un deuxième type de réseau.

15. La station mobile selon la Revendication 14, où le premier type de réseau est un réseau CDMA (accès multiple par code de répartition) (1119) et le deuxième type de réseau est un réseau GSM (système mondial de télécommunications mobiles).

16. La station mobile selon l'une quelconque des Revendications 9 à 15, où le paramètre défini par l'utilisateur comprend un téléimprimeur pour le paramètre malentendants (TTY).

17. Un système de communications sans fil (1119) comprenant au moins une station mobile (1100) selon l'une quelconque des Revendications 9 à 16.

18. Un support lisible par ordinateur (1124) comprenant un moyen à code de programme exécutable par un processeur (1138) d'une station mobile (1100), ledit moyen à code étant adapté pour mettre en oeuvre le procédé selon l'une quelconque des Revendications 1 à 8.
